Europäisches Patentamt

European Patent Office

Office européen des brevets

(11) Publication number: **0 191 547**
**B1**

(12) **EUROPEAN PATENT SPECIFICATION**

(45) Date of publication of patent specification: **07.11.90**

(21) Application number: **86300175.6**

(22) Date of filing: **13.01.86**

(51) Int. Cl.⁵: **G 01 M 3/18,** G 01 N 27/04, H 01 B 7/32

(54) Sensorcable.

(30) Priority: **14.01.85 US 691291**

(43) Date of publication of application:
**20.08.86 Bulletin 86/34**

(45) Publication of the grant of the patent:
**07.11.90 Bulletin 90/45**

(84) Designated Contracting States:
**AT BE CH DE FR GB IT LI NL SE**

(56) References cited:
EP-A-0 028 142
EP-A-1 442 11
DE-A-3 239 133

(73) Proprietor: **RAYCHEM CORPORATION (a
Delaware corporation)**
**300 Constitution Drive**
**Menlo Park, California 94025 (US)**

(72) Inventor: **Hauptly, Paul D.**
**4583 Mildred Drive**
**Fremont California 94536 (US)**
Inventor: **McCoy, Kenneth F.**
**2320 Cheshire Way**
**Redwood City California 94061 (US)**

(74) Representative: **Benson, John Everett et al**
**Raychem Limited Intellectual Property Law
Department Faraday Road Dorcan
Swindon, Wiltshire SN3 5HH (GB)**

## Description

This invention relates to the detection of leaks from liquid-containing members.

It is known, in order to detect leaks from a liquid-containing member, e.g. a pipe or a storage container, to make use of an elongate sensor which is secured to the exterior of the member and which undergoes a detectable change when it is contacted by the liquid. The sensor can be capable of undergoing the change at any point along its length or only at selected points. Particularly useful systems for detecting and locating leaks are described in EP-A1-133748 (publ. 6, 3, 85), EP-A2-144211 (publ.,12, 6, 85), EP-A1-160441 (publ. 6, 11, 85).

We have found that, in the use of such elongate sensors, false alarms may result from moisture or "nuisance" wetting of the sensor due to capillary action. At the same time, it is desirable after a true alarm, to quickly and conveniently "clear" the sensor of residual moisture or nuisance wetting so that the sensor can be restored to an original operating condition and the detection of leaks can begin anew.

The present invention substantially mitigates the problems of false alarms due to moisture or nuisance wetting and assists in providing quick restoration of a sensor to its original operating condition, e.g. in less than 1 minute.

In one aspect, the invention provides a sensor cable for detecting the presence of an electrically conductive liquid, which cable comprises:

two elongate conductors, each conductor having an exposed surface which, when the cable is immersed in the liquid, is contacted by the liquid, and

an elongate insulating member which comprises a polymeric film, which contacts each of the conductors, and which physically separates the conductors in such a way that, when the cable is immersed in the liquid, the conductors become electrically connected by the liquid along a path which is not a straight line, the direction of the path leaving one electrode being at an angle of at least 30° to the direction of the path leaving the other electrode.

In another aspect, the invention comprises a method for detecting the presence of an electrically conductive liquid, which method comprises placing a sensor cable as defined above in an environment which may contain the liquid.

In some embodiments the conductors are metal conductors coated with a conductive polymer. Preferably, the direction of the path leaving one electrode is at an angle of at least 90°, especially at least 160°, to the direction of the path leaving the other electrode.

The invention can be used to detect leaks from liquid-containing members, e.g. a pipe or storage container which contains conductive liquid, for example, water. Accordingly, the insulating member preferably is composed of a water-impermeable film, for example, a polymeric film, e.g. a polyester film.

The insulating member may comprise two polymeric films which are joined along a central portion and between which the conductors are sandwiched along respective edge portions. Preferably, in order to accommodate expansions and/or contractions of the cable, the insulating member may be provided with pockets, which pockets secure the conductors to the insulating member, the pockets comprising perforations for enabling the conductors to contact the liquid.

The sensor cable can in addition comprise one or more insulated conductors so that it is suitable for use in the detection systems described in the European patent applications referenced above. Preferably, the insulated conductors are bonded to the insulating member, and preferably the conductors run substantially parallel to each other. The sensor cable can in addition comprise a support member. The support member can be of any material, but preferably it is composed of an organic polymer or some other insulator.

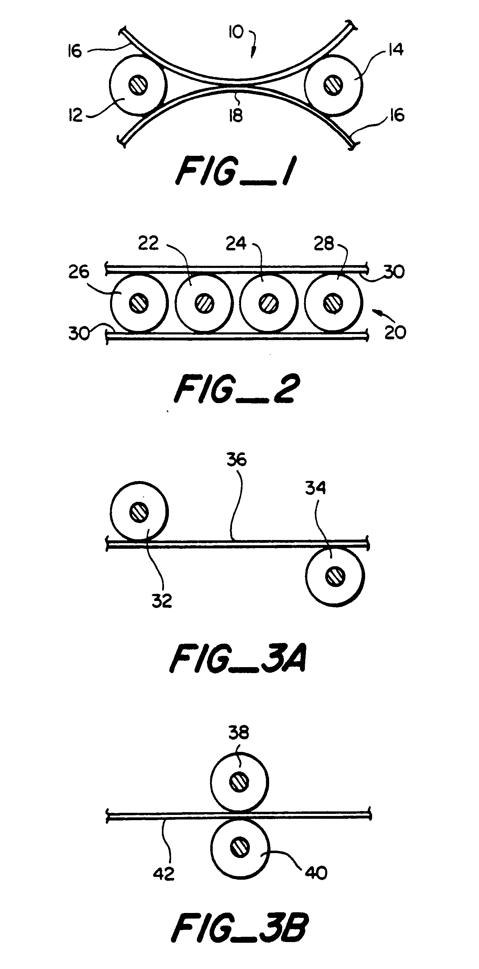

The invention is illustrated in the accompanying drawing, in which Figure 1 is a schematic of a two conductor cable l0. The cable 10 includes conductive-polymer-coated conductors 12 and 14, an insulating member 16 which comprises two water-impermeable films which are bonded to each other at the center and which physically separate the conductors 12 and 14, and a support member 18 bonded to the film 16.

Figure 2 is a schematic of a cable 20 that includes insulated conductors 22 and 24 and conductive-polymer-coated conductors 26 and 28. The four conductors are bonded to an insulating member 30 that comprises a water-impermeable film. In this arrangement, the conductors need be separated by no more than 0.127 mm (5 mils).

Figures 3A and 3B show alternative conductor-insulator configurations. In particular, Figure 3A shows conductors 32 and 34 that are located on opposite sides and ends of an insulating member 36, and Figure 3B shows conductors 38 and 40 that are located directly over each other, but on opposite sides of an insulating member 42.

## Claims

1. A sensor cable (10; 20) for detecting the presence of an electrically conductive liquid, which comprises:

two elongate conductors (12, 14; 26, 28; 32, 34; 38, 40), each conductor having an exposed surface which, when the cable is immersed in the liquid, is contacted by the liquid, and

an elongate insulating member (16; 30; 36; 42) which comprises a polymeric film, which contacts the conductors, and which physically separates the conductors in such a way that, when the cable is immersed in the liquid, the conductors become electrically connected by the liquid along a path which is not a straight line, the direction of the path leaving one electrode being at an angle of at least 30° to the direction of the path leaving the other electrode.

2. A cable according to claim 1 wherein said angle is at least 90°.

3. A cable according to claim 1 wherein said angle is at least 160°.

4. A cable according to any one of the preceding claims, wherein the insulating member comprises pockets which secure the conductors to the insulating member and which comprise perforations for enabling the conductors to contact the liquid.

5. A cable according to any one of claims 1 to 3 wherein the insulating member (16) comprises two polymeric films which are joined along a central portion (18) and between which the conductors (12, 14) are sandwiched along respective edge portions.

6. A cable according to any one of the preceding claims, wherein each of the conductors comprises a metal conductor coated with a conductive polymer.

7. A method for detecting the presence of an electrically conductive liquid, which method comprises placing a sensor cable as defined in any one of claims 1 to 6 in an environment which may contain the liquid.

**Patentansprüche**

1. Sensorkabel (10; 20) zum Nachweis der Anwesenheit einer elektrisch leitfähigen Flüssigkeit, umfassend:

zwei lange Leiter (12, 14; 26, 28; 32, 34; 38, 40), die jeweils eine freiliegende Oberfläche aufweisen, die bei Eintauchen des Kabels in die Flüssigkeit von dieser kontaktiert wird, und

einen langen Isolierkörper (16; 30; 36; 42) der einen Polymerfilm umfaßt, der die Leiter kontaktiert und die Leiter physisch so voneinander trennt derart, daß bei Eintauchen des Kabels in die Flüssigkeit die Leiter durch die Flüssigkeit entlang eines Pfades, der keine Gerade ist, elektrisch verbunden werden, wobei die Richtung des die eine Elektrode verlassenden Pfades zur Richtung des die andere Elektrode verlassenden Pfades unter einem Winkel von wenigstens 30° verläuft.

2. Kabel nach Anspruch 1, wobei der Winkel wenigstens 90° beträgt.

3. Kabel nach Anspruch 1, wobei der Winkel wenigstens 160° beträgt.

4. Kabel nach einem der vorhergehenden Ansprüche, wobei der Isolierkörper Taschen aufweist, die die Leiter am Isolierkörper befestigen un die Perforationen aufweisen, um zu ermoglichen daß die Leiter die Flüssigkeit kontaktieren.

5. Kabel nach einem der Ansprüche 1 bis 3 wobei der Isolierkörper (16) zwei Polymerfilme umfaßt die entlang eines Mittelabschnitts (18) verbunden sind und zwischen denen die Leiter (12, 14) entlang jeweiligen Randabschnitten sandwichartig angeordnet sind.

6. Kabel nach einem der vorhergehenden Ansprüche, wobei jeder Leiter einen mit einem leitfähigen Polymer beschichteten Metalleiter umfaßt.

7. Verfahren zum Nachweis des Vorhandenseins einer elektrisch leitfähigen Flüssigkeit, umfassend: Anordnen eines Sensorkabels nach einem der Ansprüche 1 bis 6 in einer Umgebung, die die Flüssigkeit enthalten kann.

**Revendications**

1. Câble détecteur (10; 20) destiné à la détection de la présence d'un liquide conduisant le courant électrique, qui comprend:

deux conducteurs de forme allongée (12, 14; 26, 28; 32, 34; 38, 40), chaque conducteur présentant une surface a nu lorsque le câble est immergé dans le liquide, entre en contact avec le liquide, et

un élément isolant (16; 30; 36; 42) de forme allongée qui comprend un film polymérique, lequel est en contact avec les conducteurs et sépare physiquement ces derniers de façon telle que lorsque le câble est immergé dans le liquide, les conducteurs sont connectés électriquement par le liquide le long d'un trajet qui n'est pas rectiligne, la direction du trajet au départ d'une électrode faisant un angle d'au moins 30° avec la direction du trajet au départ de l'autre électrode.

2. Câble suivant la revendication 1, dans lequel ledit angle est au moins égal à 90°.

3. Câble suivant la revendication 1, dans lequel ledit angle est au moins égal à 160°.

4. Câble suivant l'une quelconque des revendications précédentes, dans lequel l'élément isolant comporte des poches qui fixent les conducteurs à cet élément et qui présentent des perforations permettant le contact entre les conducteurs et le liquide.

5. Câble suivant l'une quelconque des revendications 1 à 3, dans lequel l'élément isolant (16) comprend deux films polymériques qui sont réunis le long d'une portion centrale (18) et entre lesquels les conducteurs (12, 14) s'intercalent le long de parties marginales respectives.

6. Câble suivant l'une quelconque des revendications précédentes, dans lequel chacun des conducteurs comprend un conducteur métallique revêtu d'un polymère conducteur.

7. Procédé de détection de la présence d'un liquide conduisant le courant électrique, qui consiste à mettre en place un câble détecteur tel que défini dans l'une quelconque des revendications 1 à 6 dans un environnement qui peut contenir le liquide.

FIG__1

FIG__2

FIG__3A

FIG__3B